(19) Europäisches Patentamt
European Patent Office
Office européen des brevets

(11) Publication number: 0 097 008
B1

(12) **EUROPEAN PATENT SPECIFICATION**

(45) Date of publication of patent specification: 28.01.87

(51) Int. Cl.$^4$: C 08 L 23/04, B 29 D 7/00

(21) Application number: 83303207.1

(22) Date of filing: 03.06.83

# (54) Thermoplastics film.

(30) Priority: 10.06.82 GB 8216923

(43) Date of publication of application: 28.12.83 Bulletin 83/52

(45) Publication of the grant of the patent: 28.01.87 Bulletin 87/05

(84) Designated Contracting States: AT BE DE FR GB IT NL SE

(56) References cited:
US-A-3 503 843
US-A-3 663 488
US-A-3 998 914
US-A-4 226 905
US-A-4 247 507

The file contains technical information submitted after the application was filed and not included in this specification

(73) Proprietor: BP Chemicals Limited
Belgrave House 76 Buckingham Palace Road
London, SW1W 0SU (GB)

(72) Inventor: Capaccio, Giancarlo
BP CHEMICALS LIMITED, Hayes Road, Sully
Penarth, South Glamorgan, CF6 2YU (GB)
Inventor: Frye, Christopher James
BP CHEMICALS LIMITED, Hayes Road, Sully
Penarth, South Glamorgan, CF6 2YU (GB)

(74) Representative: Denbigh, Keith Warwick et al
c/o The British Petroleum Company plc Patents
Division Chertsey Road
Sunbury-on-Thames Middlesex, TW16 7LN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 097 008 B1

**Description**

The present invention relates to thermoplastics film having improved optical properties and to a process for the production thereof.

More particularly, the invention relates to thermoplastics film having improved optical properties wherein the thermoplastics material comprises at least 70% by weight of high density polyethylene. The term "high-density polyethylene" is used throughout this specification to describe substantially linear ethylene homopolymer, ethylene hydrocarbon copolymer and blends thereof having a density not less than 935 kg $m^{-3}$.

The density of thermoplastics material including polyethylene, copolymer or blends as quoted in this specification is measured by the method described in British Standard Specification 2782, Method 620D, the specimens being moulded as indicated in Appendix A, B.2, B.3 of British Standard Specification 3412—1976.

High density ethylene homopolymers and copolymers can be manufactured for example by the well known Phillips and Ziegler processes. A large variety of grades of high density polyethylene are commercially available from such processes, each grade being adapted for use in one or more particular fabrication processes. In the manufacture of film where mechanical strength is frequently an important characteristic of the film, it is desirable to employ relatively high molecular weight grades of high density polyethylene.

The manufacture of high density polyethylene film by techniques such as film-blowing and casting through a slit die is well known in the art. High density polyethylene films manufactured by these techniques generally have reasonably good mechanical properties but frequently have inferior optical properties compared with a variety of other commercially available films, for example, cellulose acetate film or chill-roll cast polypropylene film. For example, application of the film blowing process to thermoplastics material comprising at least 70% wt high density polyethylene generally results in the production of a film which is translucent but which has an overall hazy appearance lacking optical clarity and having poor gloss characteristics.

Attempts have been made in the past to improve the optical properties of high density polyethylene film, for example by casting the film through a slit die and then passing the film between chilled rolls, but in general such techniques are applicable only to relatively low molecular weight (i.e. high melt index) grades of high density polyethylene. Such materials exhibited poor mechanical properties and have met with little success.

US—A—3998914 relates to high density polyethylene film of improved clarity and stiffness exhibiting a haze below about 40% said polyethylene film being manufactured from a blend of polymers comprising (1) a high density ethylene homopolymer of density in the range about 0.950—0.965 of melt index less than about 10, and a stress exponent value less than 1.4 and (2) about 5 to 30% of a low density ethylene polymer of melt index in the range of about 0.1 to about 10 and of density in the range about 0.910—0.945, said low density ethylene polymer being an ethylene homopolymer having a stress exponent value greater than 1.4 or an ethylene butene-1 copolymer containing a minor amount of butene-1. The examples of US—A—3998914 illustrate that films extruded from blends of high density polyethylene (HDPE) with 15—25% of low density polyethylene (LDPE) can have relatively low haze. The lowest haze was obtained using HDPE having a melt index greater than 1 in the blend or by orientating film made from the blend.

US—A—3505843 relates to a transparent polyolefin film having a modulus above $1.0\times10^5$ pounds per square inch and a haze value of less than 3%. This film is prepared for example by rolling sheet, made by "quench" casting, in the presence of lubricant so that the thickness of the sheet is reduced by a factor of one-half to one-tenth, and under conditions which cause extension and orientation of the film.

It is known that crystalline aggregates normally present in high density polyethylene scatter visible light and contribute to the overall hazy appearance of articles manufactured therefrom. However, it has now been found that, in relatively thin blown-films, the contribution to the haze arising from light scattered by the crystalline aggregates becomes less significant as the film thickness decreases, and the degree of haze and lack of clarity have been found to arise predominantly from the surface characteristics of the film.

It is an object of the present invention to provide thermoplastics film comprising at least 70% by weight of high density polyethylene wherein the film has improved optical properties, and to provide a process for the production of such film.

Accordingly one aspect of the present invention provides thermoplastics film having a thickness not greater than 100 micrometres fabricated from thermoplastics material comprising at least 90% by weight of high density polyethylene having a density not less than 935 kg $m^{-3}$, the high density polyethylene being (A) one or more ethylene homopolymers, (B) one or more ethylene hydrocarbon copolymers or (C) a blend of A and B, and the thermoplastics material as a whole having a density not less than 935 kg $m^{-3}$ and a melt index (as herein defined) of less than one, characterised in that the film has a "total haze" (as herein defined) of less than 50% and a clarity (as herein defined) of at least 25%.

In a preferred embodiment the present invention provides thermoplastic film having a thickness in the range 15—25 micrometres fabricated from thermoplastics material comprising at least 90% by weight of high density polyethylene having a density not less than 935 kg $m^{-3}$, the high density polyethylene being (A) one or more ethylene homopolymers, (B) one or more ethylene/hydrocarbon copolymers or (C) a blend

of A and B, and the thermoplastics material as a whole having a density not less than 935 kg $m^{-3}$ and a melt index (as herein defined) of less than one characterised in that the film has a "total haze" (as herein defined) of less than 50%, a clarity (as herein defined) of at least 25%, and a dart impact (as herein defined) of at least 50 g.

The terms "melt index", "total haze", "clarity", "dart impact" and "Vicat softening temperature" as used herein have the meanings set out in the following standard specifications:

| | |
|---|---|
| Melt index | — ASTM method D 1238, Condition E |
| Total haze | — ASTM D 1003—61/70, Procedure A |
| Clarity | — ASTM D 1746—70 |
| Dart impact | — ASTM D 1709—75 |
| Vicat softening temperature | — BS 2782 120 A |

The thermoplastics film of the present invention has a thickness not greater than 100 μm, preferably not greater than 50 μm. Films having a thickness not greater than 30 μm, for example, in the range 5—20 μm, are particularly preferred.

The thermoplastics material from which the film of the present invention is fabricated comprises at least 90% by weight of high density polyethylene, the balance, if any, being met by the presence of one or more compatible polymeric materials which do not deleteriously affect the properties of the high density polyethylene. Examples of suitable compatible polymeric materials are low density polyethylene (i.e. polyethylene prepared by the high pressure process using a free radical initiator), linear low density polyethylene, polypropylene, ethylene/vinyl acetate copolymer (EVA) and ethylene/ethyl acrylate copolymer. By "linear low density polyethylene" is meant an ethylene hydrocarbon copolymer having a density less than 935 kg $m^{-3}$.

The thermoplastics film of the present invention comprises at least 90%, most preferably at least 95% by weight of high density polyethylene. Thermoplastics film fabricated from 100% high density polyethylene is also preferred. The weight percentages recited throughout this specification in relation to the thermoplastics material and the high density polyethylene are inclusive of small quantities of conventional additives, for example antioxidants, optical brighteners and processing aids, which are normally present in moulding and extrusion grades of such polymers. Such additives are not normally present in amounts greater than about 1% by weight based on the weight of the thermoplastics film.

The density of the thermoplastics material from which the film is fabricated is suitably in the range 935 to 967 kg $m^{-3}$ and preferably in the range 950 to 960 kg $m^{-3}$. Most preferably the thermoplastics material is 100% by weight high density polyethylene having a density in the range 935 to 960 kg $m^{-3}$, most preferably 947 to 957 kg $m^{-3}$.

The high load melt index (HLMI) of the thermoplastics material from which the film of the present invention is fabricated is preferably in the range 4 to 25, most preferably in the range 6 to 15 as measured by ASTM method D 1238, condition F.

The high density polyethylene constituting at least 90% weight of the thermoplastics material in the film of the present invention has a density not less than 935 kg $m^{-3}$, preferably a density in the range 950 to 960 kg $m^{-3}$. Preferred grades of high density polyethylene present in the film of the present invention are ethylene homopolymers and copolymers having an HLMI in the range 4—25, most preferably in the range 6—15. Examples of suitable high density ethylene copolymers are ethylene/propylene, ethylene/butene-1 and ethylene/hexene-1 copolymers. Such copolymers having a density not less than 935 kg $m^{-3}$ will, in general, contain less than 10 weight percent of polymerised comonomer units.

The high density polyethylene suitably has a weight average molecular weight of at least 125,000, preferably at least 200,000 and most preferably at least 250,000.

The total haze of the thermoplastics film of the present invention is preferably less than 20% and more preferably less than 10%. Film having a total haze of 8% or less is particularly preferred.

The present invention further provides a process for treating raw thermoplastics film manufactured by a film-blowing process to provide film of thickness not greater than 100 μm having improved optical properties, wherein the thermoplastics material comprises at least 70% by weight of high density polyethylene being (A) one or more ethylene homopolymers, (B) one or more ethylene hydrocarbon copolymers or (C) a blend of A and B, and the thermoplastics material as a whole having a density not less than 935 kg $m^{-3}$ and a melt index (as herein defined) of less than one, characterised in that the raw blown-film is subjected to a surface pressure between two or more oppositely disposed surfaces at least one of which is a smooth surface, the subjecting being carried out at a temperature which is at least sufficient to cause plastic deformation of the thermoplastics under the action of the applied pressure so that the smooth surface causes levelling of the film surface in contact therewith.

By a "smooth surface" is meant throughout this specification a surface having a centre line average not greater than 0.1 μm, preferably not greater than 0.05 μm as measured using a "Talysurf" instrument. Use of the "Talysurf 4" to measure the surface finish of materials is described in "Metrology for Engineers"

by Gallyer and Shotbolt, 1972 Edition, Chapter 9 published by Cassell. The "Talysurf 4" instrument is available from Rank Precision Industries Ltd. of Leicester, UK.

The raw thermoplastics blown-film employed in the process of the present invention is fabricated from any of the thermoplastics materials comprising at least 70% by weight of high density polyethylene as hereinbefore described.

The raw thermoplastics film employed in the process of the present invention is manufactured by a film-blowing process by which is meant that the film is produced by a process comprising continuously extruding a tube of the polyolefin from an annular die and inflating the tube under the action of internal gas pressure. Such processes are extensively described in the prior art.

The thickness of the raw thermoplastics film employed in the process of the present invention is such that the produced final film having improved optical properties has a thickness not greater than 100 μm, preferably not greater than 50 μm and most preferably not greater than 20 μm.

The raw thermoplastics film employed in the process of the present invention may be fully or partially molecularly orientated or may be substantially unorientated. It is preferred to employ film which is at least partially orientated. The degree of orientation of the film is determined (inter alia) by the nature of the polyolefin employed in the film-blowing process and by the film-blowing conditions as is well known in the art.

The surface pressure is applied to the raw film in the process of the present invention by means of two or more oppositely disposed surfaces at least one of which is a smooth surface. The two or more oppositely disposed surfaces can be for example a pair of rollers or surfaces having substantially complementary profiles so that the film is subjected to substantially uniform pressure therebetween.

A suitable smooth surface is provided, for example by a smooth roller such as, for example, a polished chromium-plated roller or a roller coated with a smooth layer of PTFE, polyethylene terephthalate (PET) or other suitable synthetic plastics; or by a flat or complementary profiled pressure plate having a smooth, preferably polished, surface, for example the polished chromium-plated surface of a flat-bed press; or by combination of one or more smooth rollers bearing on a platform; or by a pair of flexible sheets at least one of which has a smooth internal surface to contact the film and which are urged together, for example by one or more pairs of rollers or by the surfaces of a flat-bed press. In the process of the present invention it is preferred to level both surfaces of the film. This may be achieved, for example by subjecting the film firstly to surface pressure between two or more oppositely disposed surfaces wherein one surface is smooth and the other surface (or surfaces) is matt to provide levelling of one surface of the film and then repeating the procedure to provide levelling of the other surface of the film. Alternatively both surfaces of the film can be levelled simultaneously, for example, by employing one or more pairs of oppositely disposed surfaces in which the opposite surfaces are both smooth. Preferably the two or more oppositely disposed surfaces are both smooth and are fabricated or finished in such a manner that they have a mirror-like gloss.

The surface pressure applied in the process of the present invention must be sufficient to cause plastic flow of the raw film under the temperature conditions employed. It is further preferred that the pressure should be at least sufficient to prevent any tendency the film may have to undergo shrinkage in the plane of the film. The pressure may be applied to the two oppositely disposed surfaces in any convenient manner. Under some circumstances sufficient pressure may be generated merely by sandwiching a sheet of the raw thermoplastics film between two smooth sheets of material having relatively high modulus, for example polished sheet steel, sheets of smooth thermoset plastics or other plastics material having a high softening temperature, placing the sheet "sandwich" in an oven and heating to a temperature sufficient to cause plastic flow and consequent levelling of the surface of the film under the pressure afforded by the weight of the smooth sheet. Alternatively, the "sandwich" can be rolled into a coil to provide additional pressure arising from the tendency of the coil to unwind. In the process of the present invention it is preferred that pressure is applied to the film by mechanical means which urge the two or more oppositely disposed surfaces toward one another or by means of mechanically driven rollers the surfaces of which squeeze the film and thereby cause the plastic deformation.

To avoid the use of unduly high pressures in the process of the present invention it is preferred to heat the raw thermoplastics film to facilitate the plastic deformation thereof. For a particular operating pressure, the temperature conditions required for a particular raw thermoplastics film may readily be determined by "trial and error" techniques. Heating can be carried out by any desired means, for example, by preheating the film in an oven and then subjecting the heated film to pressure between the oppositely disposed surfaces or by simultaneously heating and applying the pressure to the film. Preferably the temperature to which the film is heated is not less than (T—50)°C, where T is the Vicat softening temperature of the polyolefin.

When heating is employed in the process of the present invention it is preferred to allow the film to cool, or to positively cool the film, whilst it is still in contact with one or more smooth surfaces. Under some circumstances it may be found necessary to cool the film whilst pressure imparted by the oppositely disposed surfaces remains applied (i) to counteract any tendency of the film to shrink and/or (ii) to reduce deformation of the surface due to internal shrinkage of the thermoplastics material and/or (iii) to reduce relaxation of the orientation in an orientated raw thermoplastics film.

Where it is desired to retain at least some orientation in an orientated raw thermoplastics film to which

the process of the present invention is applied, the film must not be heated to a temperature above the crystalline melting point of the thermoplastics material.

In a particularly preferred embodiment the present invention further provides a second process for treating a raw thermoplastics film of the type hereinbefore described to produce a film of thickness not greater than 100 μm having improved optical properties comprising sandwiching the raw film between two sheets of material having one or more smooth surfaces adjacent the film and removing any substantial gas voids trapped between the film and the sheets, heating the film to a temperature sufficiently high to permit plastic deformation of the film surface so that the film surfaces become levelled by contact with the smooth surfaces and cooling the levelled film.

In the second process of the present invention the sheets of material having smooth surfaces are suitable sheets of a material having a relatively high modulus, for example, steel, stainless steel, chromium plated steel, thermoset resin or a thermoplastics resin having a higher softening temperature than the film material, for example, PET or polytetrafluoroethylene (PTFE).

In the second process of the present invention it is essential to achieve good contact between the smooth internal surfaces of the sheets and the raw film; thus any substantial gas voids (e.g. air voids) between the film and the sheets can be removed, for example, by the use of a squeegee or roller to work such voids to the periphery of the "sandwich". The presence of static electricity on the surface of the film and/or sheets can assist in giving good contact, although under these circumstances it is particularly important to carry out the process in a dust free environment to avoid the attraction of dust particles to the film and/or sheets.

If desired, external pressure may be applied to urge the sheets together and thus give increased contact with the film.

In the second process of the present invention, the raw film is suitably heated to a temperature not less than (T—50)°C where T is the Vicat softening point.

The heating may be carried out for any desired period of time which is at least sufficient to allow plastic deformation of the film surface.

Thermoplastics film produced by the processes of the present invention has high clarity and improved gloss compared with the untreated film. The film is useful, for example in packaging applications, particularly for food packaging where high clarity is called for.

This invention is further described with reference to the accompanying diagrammatic drawing Figure 1 which represents apparatus for manufacture of high density polyethylene film in accordance with the present invention.

In Figure 1, a continuous length of slit HDPE film 1 is fed between two belts (2, 3) of Melinex (RTM) polyethylene terephthalate film which pass between heated rollers (4, 5). The Melinex film had a centre line average (Talysurf) of 0.02 μm and a gloss of 125 units (BS2782—515B). The HDPE film is X μm thick, the Melinex film has a thickness of Y μm and the nip is set at less than (X+2Y) μm. The rollers 4 and 5 are maintained at a temperature 50°C below the Vicat softening temperature or greater. The film emerges from the rollers sandwiched between the Melinex belts where it is allowed to cool in zone 6. Finally the levelled film emerges from a pair of rollers 7 where it is stripped from the Melinex belts and spooled on drum 8. The film emerging from the rollers 7 has improved clarity and gloss and retains the good toughness associated with blown films.

The invention is further illustrated in the following Examples. In the Examples the total haze, bulk haze and total surface haze were measured as follows:

1. Total haze

This property was measured in accordance with ASTM D 1003—61/70 Procedure A.

2. Bulk haze

This property was measured by an adaptation of ASTM D 1003—61/70 Procedure A whereby a liquid of suitable refractive index is used to substantially eliminate that part of the haze which is due to irregularities in the surface of the film.

The liquid used was glycerol to which mercury iodide and potassium iodide had been added according to the equation

$$Hg\ I_2 + 2KI = K_2HgI_4$$

The refractive index of the resulting mixture is in the range 1.48 to 1.69 depending upon concentration. A liquid of refractive index 1.53 was prepared to be in agreement with the value for high density polyethylene.

Drops of the liquid were placed onto clean, dry glass microscope slides. The high density polyethylene film specimen to be tested was sandwiched between the faces of the slides so that it was wetted by the liquid on both surfaces. After checking that no air bubbles were present in the liquid, the haze ($h_1$) of the complete sandwich was determined according to ASTM D1003 Procedure A.

In order to correct for the contribution to the haze caused by the glass slides, a similar experiment was

performed but without the film specimen. The value recorded $h_2$ which is generally less than 1% was subtracted from $h_1$ to give the bulk haze of the film $h_3$

$$h_3=h_1-h_2$$

3. Total surface haze

It has been found that the total haze present in films fabricated from thermoplastics materials of the type with which the present invention is concerned, and measured as defined above, arises from two sources. These are (1) the contribution arising from within the thermoplastics material, herein referred to as the "bulk haze" and (2) the contribution arising from the presence of irregularities on the two surfaces of the film, herein referred to as the "total surface haze". This can be expressed in terms of the relationship:

Total surface haze %=total haze % minus bulk haze %

The term "total surface haze" is defined as the "total haze %" minus the "bulk haze %", wherein the "total haze %" and the "bulk haze %" are measured in accordance with the methods described herein. The "total surface haze %" represents the sum of the haze contributions arising from each side of the film.

It will be appreciated that the contribution to the total haze arising from the bulk haze for a given thermoplastics material will depend on the thickness of the film whereas the contribution arising from the total surface haze is substantially independent of the film thickness.

Examples 1 and 2

Two grades of high density polyethylene film manufactured by the film blowing process were employed in these Examples. In Example 1 the film was based on an ethylene homopolymer having a density of 951 kg $m^{-3}$ and a HLMI of 9.8 and in Example 2 the film was based on an ethylene homopolymer having a density of 949 kg $m^{-3}$ and a HLMI of 8.0. In these Examples the film was sandwiched between sheets of Melinex (Registered Trade Mark for ICI's polyethylene terephthalate sheet) having a centre line average of 0.02 μm (Talysurf) and a gloss of 125 units and passed through the nip of a pair of rolls heated to 105°C set at a nip of 175 μm and spring loaded to provide a constant load on the sandwich. The sandwich comprising alternate layers of Melinex and HDPE film (3 layers of Melinex and 2 layers of film) was 190 μm thick. The film was passed through the nip at a rate of 0.4 metres per minute.

The properties of the film "as blown" and after treatment in accordance with the process of the present invention are shown in the Table. It will be observed from the Table that the total haze has been reduced, and the gloss and tensile modulus have improved in Examples 1 and 2 whilst the other mechanical properties have remained substantially the same or suffered slight deterioration. In particular the combination of good optical properties and high impact resistance should be noted in Example 1.

TABLE

| Property | | Film as blown | | Film treated in accordance with the present invention | | Test method |
|---|---|---|---|---|---|---|
| | | Ex. 1 | Ex. 2 | Ex. 1 | Ex. 2 | |
| Thickness (μm) | | 20 | 20 | 20 | 20 | — |
| Density (kg $m^{-3}$) | | 951 | 949 | 955 | 953 | BS2782—620D |
| Gloss (units) | | 7 | 7 | 85 | 94 | BS2782—515B |
| Total haze (%) | | 82 | 75 | 8 | 6 | ASTM—D—1003 |
| Bulk haze (%) | | — | 2.7 | — | 3.3 | — |
| Total surface haze (%) | | — | 72.3 | — | 2.7 | By subtraction |
| Clarity % | | 0 | 0 | 29 | 52 | ASTM D1746—70 |
| Dart impact (gms) | | 150 | 105 | 100 | 55 | ASTM D1709—75 |
| Elmendorf (mN) (unnotched) | MD | 466 | 186 | 270 | 54 | — |
| Tensile strength (MPa) | MD | 38.6 | 38.2 | 34.1 | 39.2 | ASTM D882—75 |
| Elongation (%) | MD | 486 | 394 | 191 | 268 | " " |
| Tensile modulus (MPa) | MD | 903 | 831 | 952 | 894 | " " |
| Shrinkage @ 145°C+ (%) | MD | 82 | 82 | 80 | 84 | — |
| | TD | 64 | 58 | 64 | 55 | — |

Notes
MD — machine direction
TD — transverse direction
+ — measured by suspension in a hot air oven for 5 minutes.

**Claims**

1. Thermoplastics film having a thickness not greater than 100 μm fabricated from thermoplastics material comprising at least 90% by weight of high density polyethylene having a density not less than 935 kg $m^{-3}$, the high density polyethylene being
(A) one or more ethylene homopolymers,
(B) one or more ethylene hydrocarbon copolymers or
(C) a blend of A and B, and the thermoplastics material as a whole having a density not less than 935 kg $m^{-3}$ and a melt index (ASTM method D1238, condition E) of less than 1, characterised in that the film has a "total haze" (ASTM D1003—61/70, procedure A) of less than 50% and a clarity (ASTM D1746—70) of at least 25%.

2. Thermoplastics film as claimed in claim 1 having a thickness in the range 15—25 μm and having a dart impact (ASTM D1709—75) of at least 50 g.

3. Thermoplastics film as claimed in claim 1 or claim 2 wherein the thermoplastics material comprises at least 95% by weight of high density polyethylene.

4. Thermoplastics film as claimed in any one of claims 1 to 3 wherein the density of the thermoplastics material from which the film is fabricated is in the range 947—957 kg $m^{-3}$.

5. Thermoplastics film as claimed in any one of the preceding claims fabricated from thermoplastics material having a high load melt index (ASTM method D1238, condition F) in the range 4—25.

6. Thermoplastics film as claimed in any one of the preceding claims having a total haze less than 10%.

7. A process for treating raw thermoplastics film manufactured by a film-blowing process to provide film of thickness not greater than 100 μm having improved optical properties, wherein the thermoplastics material comprises at least 70% by weight of high density polyethylene being

(A) one or more ethylene homopolymers,

(B) one or more ethylene hydrocarbon copolymers or

(C) a blend of A and B, and the thermoplastics material as a whole having a density not less than 935 kg $m^{-3}$ and a melt index of less than 1, characterised in that the raw blown-film is subjected to a surface pressure between two or more oppositely disposed surfaces at least one of which is a smooth surface, the subjecting being carried out at a temperature which is at least sufficient to cause plastic deformation of the thermoplastics under the action of the applied pressure so that the smooth surface causes levelling of the film surface in contact therewith.

8. A process for treating a raw thermoplastics film manufactured by a film-blowing process to provide a film of thickness not greater than 100 μm having improved optical properties, wherein the thermoplastics material comprises at least 70% by weight of high density polyethylene being

(A) one or more ethylene homopolymers,

(B) one or more ethylene hydrocarbon copolymers, or

(C) a blend of A and B, and the thermoplastics material having a density not less than 935 kg $m^{-3}$ and a melt index of less than 1, characterised in that the raw film is sandwiched between two sheets of material having one or more smooth surfaces adjacent the film and removing any substantial gas voids trapped between the film and the sheets, heating the film to a temperature sufficiently high to permit plastic deformation of the film surface so that the film surfaces become levelled by contact with the smooth surfaces and cooling the levelled film.

9. A process as claimed in claim 7 wherein the two or more oppositely disposed surfaces are provided by two or more oppositely disposed rollers.

10. A process as claimed in claim 7 or claim 8 wherein the smooth surfaces are provided by sheets of polyethylene terephthalate.

**Patentansprüche**

1. Thermoplasten-Folie mit einer Dicke, die nicht größer als 100 μm ist, hergestellt aus thermoplastischem Material, enthaltend mindestens 90 Gew.-% eines Polyethylens hoher Dichte, mit einer Dichte, die nicht geringer ist als 935 kg $m^{-3}$, wobei das Polyethylen hoher Dichte

(A) ein oder mehrere Ethylenhomopolymere,

(B) ein oder mehrere Ethylen-Kohlenwasserstoff-Copolymere oder

(C) eine Mischung von A und B ist, und das thermoplastische Material insgesamt eine Dichte von nicht weniger als 935 kg $m^{-3}$ und einen Schmelzindex (ASTM Methode D1238, Bedingung E) von weniger als 1 aufweist, dadurch gekennzeichnet, daß die Folie eine "Gesamttrübung" (ASTM D1003—61/70), Verfahren A) von weniger als 50 % und eine Klarheit (ASTM D1746—70) von mindestens 25 % aufweist.

2. Thermoplasten-Folie nach Anspruch 1 mit einer Dicke im Bereich von 15—25 μm und mit einem "dart impact" (ASTM D1709—75) von mindestens 50 g.

3. Thermoplasten-Folie nach Anspruch 1 oder 2, worin das Thermoplasten-Material mindestens 95 Gew.-% Polyethylen hoher Dichte umfaßt.

4. Thermoplasten-Folie nach einem der Ansprüche 1 bis 3, worin die Dichte des Thermoplasten-Materials, aus dem die Folie hergestellt ist, in dem Bereich 947—957 kg $m^{-3}$ liegt.

5. Thermoplasten-Folie nach einem der vorhergehenden Ansprüche, hergestellt aus Thermoplasten-Material mit einem Hoch-Last-Schmelzindex (ASTM Methode D1238, Bedingung F) in dem Bereich von 4—25.

6. Thermoplasten-Folie nach einem der vorhergehenden Ansprüche mit einer Gesamttrübung von weniger als 10 %.

7. Verfahren zum Behandeln von roher Thermoplasten-Folie, hergestellt durch ein Folienblasverfahren, um eine Folie einer Dicke, die nicht größer als 100 μm ist, mit verbesserten optischen Eigenschaften zur Verfügung zu stellen, worin das Thermoplasten-Material mindestens 70 Gew.-% eines Polyethylens hoher Dichte umfaßt, das

(A) ein oder mehrere Ethylenhomopolymere,

(B) ein oder mehrere Ethylen-Kohlenwasserstoff-Copolymere oder

(C) eine Mischung von A und B ist, und das Thermoplasten-Material insgesamt eine Dichte von nicht weniger als 935 kg $m^{-3}$ und einen Schmelzindex von weniger als 1 hat, dadurch gekennzeichnet, daß die rohe geblasene Folie einem Oberflächendruck zwischen zwei oder mehreren entgegengesetzt angeordneten Oberflächen unterworfen wird, wobei mindestens eine davon eine glatte Oberfläche ist, wobei das Unterwerfen bei einer Temperatur durchgeführt wird, die mindestens ausreichend ist, um plastische Deformation der Thermoplasten unter der Wirkung des angewandten Drucks zu verursachen, so daß die glatte Oberfläche eine Einebnung der Folienoberfläche in Kontakt damit verursacht.

8. Verfahren zur Behandlung einer durch ein Folienblas-Verfahren hergestellten rohen Thermoplasten-Folie, um eine Folie einer Dicke, die nicht größer als 100 μm ist, mit verbesserten optischen Eigenschaften

zur Verfügung zu stellen, worin das Thermoplasten-Material mindestens 70 Gew.-% eines Polyethylens hoher Dichte umfaßt, das

(A) ein oder mehrere Ethylenhomopolymere

(B) ein oder mehrere Ethylen-Kohlenwasserstoff-Copolymere oder

(C) eine Mischung von A und B ist, und das Thermoplasten-Material eine Dichte von nicht weniger als 935 kg $m^{-3}$ und einen Schemlzindex von weniger als 1 aufweist, dadurch gekennzeichnet, daß die rohe Folie schichtenartig zwischen zwei Materialschichten mit einer oder mehreren glatten Oberflächen benachbart zu der Folie eingebracht wird, und etwaige wesentliche Gasblasen, die zwischen der Folie und den Schichten eingeschlossen sind, entfernt werden, daß die Folie auf eine ausreichend hohe Temperatur erhitzt wird, damit plastische Verformung der Folienoberfläche ermöglicht wird, so daß die Folienoberflächen durch Kontakt mit den glatten Schichten eingeebnet werden und, daß die eingeebnete Folie abgekühlt wird.

9. Verfahren nach Anspruch 7, worin die zwei oder mehreren gegenüber angeordneten Oberflächen durch zwei oder mehrere gegenüber angeordnete Walzen zur Verfügung gestellt werden.

10. Verfahren nach Anspruch 7 oder 8, worin die glatten Oberflächen durch Schichten von Polyethylenterephthalat zur Verfügung gestellt werden.

**Revendications**

1. Pellicule de matière thermoplastique, ayant une épaisseur non supérieure à 100 µm, fabriquée en une matière thermoplastique comprenant au moins 90 % en poids de polyéthylène à haute densité, ayant une masse volumique non inférieure à 935 kg $m^{-3}$, le polyéthylène à haute densité étant constitué par:

(A) un ou plusieurs homopolymères de l'éthylène,

(B) un ou plusieurs copolymères éthylène/hydrocarbure, ou

(C) un mélange de A et de B, et la matière thermoplastique dans son ensemble ayant une masse volumique non inférieure à 953 kg $m^{-3}$ et un indice de fusion (méthode de la norme ASTM D1238, état E) inférieur à 1, pellicule caractérisée en ce qu'elle possède un "trouble total" (norme ASTM D1003—61/70, mode opératoire A) inférieur à 50 % et une clarté (norme ASTM D1746—70) d'au moins 25 %.

2. Pellicule thermoplastique selon la revendication 1, ayant une épaisseur comprise entre 15 et 25 µm et ayant une résistance aux chocs d'une flèche (norme ASTM D1709—75) d'au moins 50 g.

3. Pellicule thermoplastique selon la revendication 1 ou la revendication 2, dans laquelle la matière thermoplastique comprend au moins 95 % en poids de polyéthylène à haute densité.

4. Pellicule thermoplastique selon l'une quelconque des revendications 1 à 3, dans laquelle la masse volumique de la matière thermoplastique à partir de laquelle la pellicule est fabriquée se situe entre 947 et 957 kg $m^{-3}$.

5. Pellicule thermoplastique selon l'une quelconque des revendications précédentes, fabriquée en une matière thermoplastique ayant un indice de fusion sous charge élevée (méthode ASTM D1238, état F) compris entre 4 et 25.

6. Pellicule thermoplastique selon l'une quelconque des revendications précédentes, ayant un trouble total inférieur à 10 %.

7. Procédé pour traiter une pellicule thermoplastique brute fabriquée par un procédé de soufflage de pellicule pour obtenir une pellicule dont l'épaisseur n'est pas supérieure à 100 µm et qui possède de meilleures propriétés optiques, dans lequel la matière thermoplastique comprend au moins 70 % en poids de polyéthylène à haute densité constitué par

(A) un ou plusieurs homopolymères de l'éthylène,

(B) un ou plusieurs copolymères éthylène/hydrocarbure, ou

(C) un mélange de A et B, et la matière thermoplastique dans son ensemble a une masse volumique non inférieure à 935 kg $m^{-3}$ et un indice de fusion inférieur à 1, procédé caractérisé en ce qu'on soumet la pellicule soufflée brute à une pression superficielle entre deux ou plusieurs surfaces, disposées de manière à être opposées, dont l'une au moins est une surface lisse, l'opération étant effectuée à une température qui est au moins suffisante pour provoquer une déformation plastique de la matière thermoplastique sous l'action de la pression appliquée de sorte que la surface lisse provoque un nivellement de la surface de pellicule en contact avec elle.

8. Procédé pour traiter une pellicule thermoplastique brute fabriquée par un procédé de soufflage de pellicule, pour obtenir une pellicule dont l'épaisseur n'est pas supérieure à 100 µm et qui possède de meilleures propriétés optiques, dans lequel la matière thermoplastique comprend au moins 70 % en poids de polyéthylène à densité élevée, constitué par:

(A) un ou plusieurs homopolymères de l'éthylène,

(B) un ou plusieurs copolymères éthylène/hydrocarbures, ou

(C) un mélange de A et de B, la matière thermoplastique ayant une masse volumique non inférieure à 935 kg $m^{-3}$ et un indice de fusion inférieur à 1, procédé caractérisé en ce qu'on intercale "en sandwich" la pellicule brute entre deux feuilles de matière ayant une ou plusieurs surfaces lisses voisines de la pellicule et l'on enlève tous les vides éventuels comportant beaucoup de gaz emprisonnés entre la pellicule et les feuilles, ou chauffe la pellicule jusqu'à une température suffisamment élevée pour permettre une

déformation plastique de la surface de la pellicule de sorte que les surfaces de la pellicule deviennent nivelées par contact avec les surfaces lisses, et l'on refroidit la pellicule nivelée.

9. Procédé selon la revendication 7, dans lequel les deux ou plus de deux surfaces, disposées de manière à être opposées, sont constituées par deux ou plus de deux rouleaux disposés de manière à être opposés.

10. Procédé selon la revendication 7 ou la revendication 8, dans lequel les surfaces lisses sont fournies par des feuilles de téréphtalate de polyéthylène.

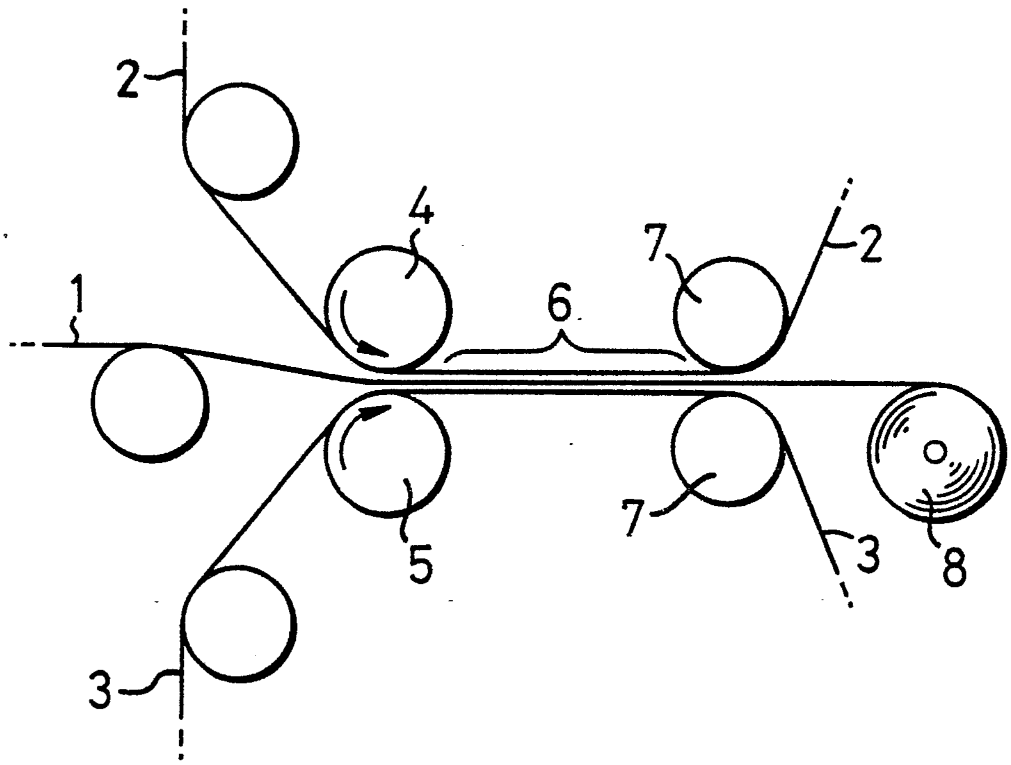


FIG.1